(19) Europäisches Patentamt / European Patent Office / Office européen des brevets

(11) **EP 4 300 524 A1**

(12) **EUROPEAN PATENT APPLICATION**
published in accordance with Art. 153(4) EPC

(43) Date of publication:
03.01.2024 Bulletin 2024/01

(21) Application number: 22780854.0

(22) Date of filing: 29.03.2022

(51) International Patent Classification (IPC):
$H01G\ 11/52^{(2013.01)}$ $H01M\ 10/058^{(2010.01)}$
$H01M\ 50/449^{(2021.01)}$ $H01M\ 50/489^{(2021.01)}$

(52) Cooperative Patent Classification (CPC):
H01G 11/52; H01M 10/058; H01M 50/449;
H01M 50/489

(86) International application number:
PCT/JP2022/015290

(87) International publication number:
WO 2022/210643 (06.10.2022 Gazette 2022/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.04.2021 JP 2021063142

(71) Applicant: GS Yuasa International Ltd.
Kisshoin, Minami-ku,
Kyoto-shi, Kyoto 601-8520 (JP)

(72) Inventor: TANAKA Kie
Kyoto-shi, Kyoto 601-8520 (JP)

(74) Representative: Isarpatent
Patent- und Rechtsanwälte
Barth Hassa Peckmann & Partner mbB
Friedrichstraße 31
80801 München (DE)

(54) **ELECTRICITY STORAGE ELEMENT**

(57) An energy storage device according to one aspect of the present invention includes: an electrode assembly in which a positive electrode and a negative electrode are stacked with a separator interposed between the positive electrode and the negative electrode; an electrolyte solution; and a case which houses the electrode assembly and the electrolyte solution, in which the electrode assembly is in a state where a load is applied, a pressure $P_0$ (MPa) applied to the electrode assembly in a discharged state, and a strain A obtained when the separator is compressed in a thickness direction under an environment of 45°C at a pressure of 2 MPa satisfy the following Formula 1.

$$P_0\,(1 - A) < 1.2\ (MPa)\ ...\ 1$$

Fig. 1

**Description**

TECHNICAL FIELD

The present invention relates to an energy storage device.

BACKGROUND ART

Nonaqueous electrolyte solution secondary batteries typified by lithium ion secondary batteries are widely used for electronic devices such as personal computers and communication terminals, motor vehicles, and the like since these secondary batteries have a high energy density. Also, capacitors such as lithium ion capacitors and electric double-layer capacitors, energy storage devices with electrolyte solutions other than nonaqueous electrolyte solution used, and the like are also widely used as energy storage devices other than nonaqueous electrolyte solution secondary batteries.

In an assembled battery or the like including a plurality of energy storage devices, in order to increase the energy density or the like, there is a case where the energy storage devices are arranged with no gap therebetween and are used in a state of being bound by a binding member or the like. Patent Document 1 describes a secondary battery including an electrode assembly formed by stacking a positive electrode and a negative electrode in a stacking direction with a separator interposed therebetween, an aluminum battery case housing the electrode assembly, an insulating film provided between the electrode assembly and an inner wall of the battery case, and a binding member disposed outside the battery case and binding the electrode assembly while pressurizing the electrode assembly in the stacking direction with the battery case and the insulating film interposed therebetween.

PRIOR ART DOCUMENT

PATENT DOCUMENT

Patent Document 1: JP-A-2018-45797

SUMMARY OF THE INVENTION

PROBLEMS TO BE SOLVED BY THE INVENTION

In order to, for example, increase the energy density by binding the energy storage device, it is preferable to bind the energy storage device with a sufficient pressure with respect to the energy storage device. However, in the energy storage device, when a load is applied to the electrode assembly, a discharge capacity or the like at a high current density may be greatly reduced.

The present invention has been made in view of the foregoing circumstances, and an object of the present invention is to provide an energy storage device in which a load is applied to an electrode assembly, and a decrease in discharge capacity at a high current density is suppressed.

MEANS FOR SOLVING THE PROBLEMS

An energy storage device according to one aspect of the present invention includes: an electrode assembly in which a positive electrode and a negative electrode are stacked with a separator interposed between the positive electrode and the negative electrode; an electrolyte solution; and a case which houses the electrode assembly and the electrolyte solution, in which the electrode assembly is in a state where a load is applied, a pressure $P_0$ (MPa) applied to the electrode assembly in a discharged state, and a strain A obtained when the separator is compressed in a thickness direction under an environment of 45°C at a pressure of 2 MPa satisfy the following Formula 1.

$$P_0 \, (1 - A) < 1.2 \, (\text{MPa}) \, ... \, 1$$

An energy storage device according to another aspect of the present invention includes: an electrode assembly in which a positive electrode and a negative electrode are stacked with a separator interposed between the positive electrode and the negative electrode; an electrolyte solution; and a case which houses the electrode assembly and the electrolyte solution, in which the electrode assembly is in a state where a load is applied, and a difference between a pressure $P_0$ applied to the electrode assembly in a discharged state and a pressure $P_1$ applied to the electrode assembly in a charged state is 0.90 MPa or less.

ADVANTAGES OF THE INVENTION

According to the present invention, it is possible to provide the energy storage device in which the load is applied to the electrode assembly, and a decrease in discharge capacity at a high current density is suppressed.

BRIEF DESCRIPTION OF THE DRAWINGS

Fig. 1 is a see-through perspective view illustrating an embodiment of an energy storage device.
Fig. 2 is a schematic diagram illustrating an embodiment of an energy storage apparatus including a plurality of energy storage devices.
Fig. 3 is a graph showing a relationship between a pressure difference $(P_1-P_0)$ and a discharge capacity ratio in each energy storage device of Examples and Comparative Examples.
Fig. 4 is a graph showing a relationship between $P_0$ $(1-A)$ and the pressure difference $(P_1-P_0)$ in each energy storage device of Examples and Comparative Examples.
Fig. 5 is a graph showing a discharge capacity retention ratio in a charge-discharge cycle test of each energy storage device of Reference Examples.

MODE FOR CARRYING OUT THE INVENTION

First, an outline of an energy storage device disclosed in the present specification will be described.
An energy storage device according to one aspect of the present invention includes: an electrode assembly in which a positive electrode and a negative electrode are stacked with a separator interposed between the positive electrode and the negative electrode; an electrolyte solution; and a case which houses the electrode assembly and the electrolyte solution, in which the electrode assembly is in a state where a load is applied, a pressure $P_0$ (MPa) applied to the electrode assembly in a discharged state, and a strain A obtained when the separator is compressed in a thickness direction under an environment of 45°C at a pressure of 2 MPa satisfy the following Formula 1.

$$P_0 \, (1 - A) < 1.2 \, (\mathrm{MPa}) \, ... \, 1$$

An energy storage device according to one aspect of the present invention is an energy storage device in which a load is applied to an electrode assembly, and a decrease in discharge capacity at a high current density is suppressed. Although the reason why such an effect is produced is not clear, the following reason is presumed. A difference in pressure applied to the electrode assembly between the discharged state and a charged state increases when expansion of the negative electrode is suppressed, such as when a magnitude of strain obtained when the separator is compressed in the thickness direction of the separator is small with respect to a magnitude of expansion of an active material of the negative electrode in the thickness direction accompanying charge. In such a case, the expansion of the active material of the negative electrode increases a contact area between the active material and the binder, and as a result, conductivity of the negative electrode decreases. It is considered that although the negative electrode contracts with the discharge and returns to an original state, recovery does not catch up in the discharge at a high current density, and the discharge is performed in a state where the conductivity of the negative electrode is low, so that the discharge capacity decreases. As another factor, a void of the negative electrode decreases in size due to expansion of the active material of the negative electrode, and the electrolyte solution in the void of the negative electrode flows out of the electrode assembly. It is considered that the void of the negative electrode returns to the original size with the discharge, and the electrolyte solution flows into the void from the outside of the electrode assembly; however, in the discharge at a high current density, the inflow of the electrolyte solution does not catch up, and an amount of the electrolyte solution around the active material of the negative electrode locally decreases, so that reaction resistance increases, and the discharge capacity decreases. On the other hand, in the energy storage device according to one aspect of the present invention, in the separator in which the strain A is close to 1, that is, which is easily compressed, the separator is sufficiently compressed when the active material of the negative electrode expands with charge, and therefore, it is possible to reduce an increase in pressure applied to the electrode assembly with charge, that is, a difference $(P_1-P_0)$ between pressure $P_0$ applied to the electrode assembly in the discharged state and the pressure $P_1$ applied to the electrode assembly in the charged state. On the other hand, the separator in which the strain A is close to 0, that is, which is hardly compressed is not sufficiently compressed when the active material of the negative electrode expands with charge; however, the pressure difference $(P_1-P_0)$ can be reduced by further reducing the pressure $P_0$. Thus, when Formula 1 is satisfied, the decrease in discharge capacity at a high current density is further suppressed.

The strain A is a value obtained by the following Formula 2 from an average thickness $T_a$ of the separator in a no-load state under an environment of 45°C and an average thickness $T_b$ of the separator in a state of being compressed in the thickness direction under an environment of 45°C at a pressure of 2 MPa. The average thickness of the separator is regarded as an average of measured values of thicknesses measured at any five points.

$$A = (T_a - T_b)/(T_a) \ ... \ 2$$

The difference between the pressure $P_0$ and the pressure $P_1$ applied to the electrode assembly in the charged state is preferably 0.90 MPa or less. In such a case, since the difference ($P_1$-$P_0$) between the pressure $P_0$ applied to the electrode assembly in the discharged state and the pressure $P_1$ applied to the electrode assembly in the charged state is as small as 0.90 MPa or less, the decrease in the conductivity of the negative electrode and the outflow of the electrolyte solution from the gap of the negative electrode hardly occur even in the charged state. This further suppresses the decrease in discharge capacity at a high current density when a load is applied to the electrode assembly.

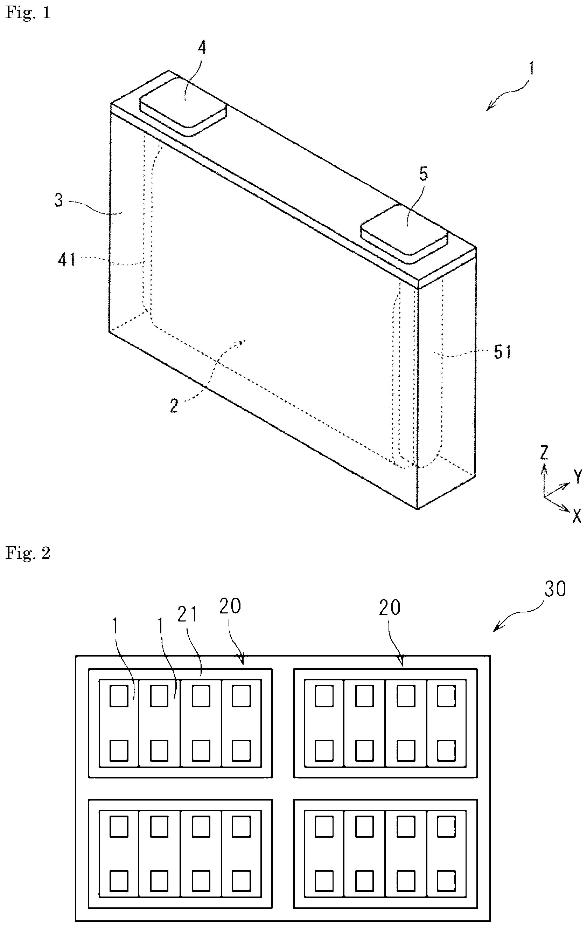

The pressure applied to the electrode assembly is a pressure applied in the thickness direction (Y direction in Fig. 1) of the stacked positive electrode, negative electrode, and separator. The pressure applied to the electrode assembly is a value measured by the following method. First, a thickness (thickness in the Y direction in Fig. 1) in a state where a load is applied by a restraining member or the like in the energy storage device is measured. Subsequently, the load applied by the restraining member or the like is released, and the energy storage device is pressed in the thickness direction using a compression tester so as to have a thickness in a state where the load is applied. At this time, a force indicated by the compression tester is defined as a load applied to the electrode assembly. A value obtained by dividing the load applied to the electrode assembly by an area of a contact surface between a probe of the compression tester and the energy storage device is defined as a pressure applied to the electrode assembly. This measurement is performed on each of the energy storage devices in the discharged state and the charged state.

The "charged state" and the "discharged state" of the energy storage device refer to a state where the following operation is performed. When the energy storage device is subjected to constant current charge with a current of 1.0 C until the voltage becomes an end-of-charge voltage under normal usage, and then to constant voltage charge for 3 hours, this state is referred to as the "charged state". A state where constant current discharge is performed with a current of 1.0 C up until the voltage becomes the lower limit voltage under normal usage after a pause of 10 minutes from the achievement of the charged state is referred to as the "discharged state". The "during normal usage" herein means use of the energy storage device while employing charge-discharge conditions recommended or specified in the energy storage device, and when a charger is prepared for the energy storage device, this term means use of the energy storage device by applying the charger.

The strain A is preferably 0.05 or more and 0.3 or less. When the strain A is equal to or more than the above lower limit, sufficient compression occurs when a load is applied to the separator in the thickness direction, and therefore, the decrease in discharge capacity at a high current density when a sufficient load is applied to the electrode assembly is further suppressed. On the other hand, in a case where the strain A is equal to or less than the above upper limit, when a load is applied to the separator in the thickness direction, the decrease in ion permeability due to excessive compression is suppressed, and the decrease in discharge capacity at a high current density when a sufficient load is applied to the electrode assembly is further suppressed.

The separator preferably has air permeability resistance of 250 seconds/100 mL or less. In such a case, sufficient ion permeability can be secured even in a state where the separator is compressed, and therefore, the decrease in discharge capacity at a high current density when a load is applied to the electrode assembly is further suppressed.

The "air permeability resistance" of the separator is a value measured in accordance with JIS-P8117 (2009), and is an average value measured at any 5 points.

The pressure $P_0$ is preferably 0.40 MPa or more and 1.40 MPa or less. In such a case, application of an excessive pressure to the electrode assembly is further suppressed, whereby the decrease in discharge capacity at a high current density is further suppressed. When the pressure $P_0$ is equal to or more than the above lower limit, the gap in the electrode assembly is reduced, and gas generated by charging and discharging is less likely to be accumulated in the electrode assembly; therefore, the energy density and a discharge capacity retention ratio in a charge-discharge cycle can be increased, for example.

The pressure $P_1$ is preferably 1.30 MPa or more and 2.00 MPa or less. By setting the pressure $P_1$ to be equal to or more than the above lower limit, the energy density, the discharge capacity retention ratio in the charge-discharge cycle, and the like can be increased. On the other hand, by setting the pressure $P_1$ to be equal to or less than the above upper limit, application of an excessive pressure to the electrode assembly in the charged state is suppressed, and the decrease in discharge capacity at a high current density is further suppressed.

The average thickness of the separator is preferably 3 pm or more and 100 pm or less. When the average thickness of the separator is equal to or more than the above lower limit, it is possible to reliably electrically isolate the positive electrode and the negative electrode from each other, it is possible to sufficiently absorb an increase in the thickness of the negative electrode that expands with charge by compression of the separator, and it is possible to sufficiently reduce the difference ($P_1$-$P_0$) between the pressure $P_1$ and the pressure $P_0$. When the average thickness of the separator is equal to or less than the above upper limit, the energy density of the energy storage device can be increased.

The separator preferably includes a substrate layer and a coating layer containing particles and a binder formed on one surface or both surfaces of the substrate layer. In such a case, strength of the separator can be increased.

An energy storage apparatus according to another aspect of the present invention includes the energy storage device described above. The energy storage apparatus preferably includes the energy storage device bound in a constant size. In such a case, the effect of suppressing the decrease in discharge capacity at a high current density can be particularly sufficiently obtained.

An automobile according to another aspect of the present invention includes the energy storage device described above.

A power source for an electronic device according to another aspect of the present invention includes the energy storage device described above.

An energy storage device according to another aspect of the present invention includes: an electrode assembly in which a positive electrode and a negative electrode are stacked with a separator interposed between the positive electrode and the negative electrode; an electrolyte solution; and a case which houses the electrode assembly and the electrolyte solution, in which the electrode assembly is in a state where a load is applied, and a difference between a pressure $P_0$ applied to the electrode assembly in a discharged state and a pressure $P_1$ applied to the electrode assembly in a charged state is 0.90 MPa or less.

An energy storage device according to another aspect of the present invention is an energy storage device in which a load is applied to an electrode assembly, and a decrease in discharge capacity at a high current density is suppressed. Although the reason why such an effect is produced is not clear, the following reason is presumed. In the energy storage device according to another aspect of the present invention, since the difference ($P_1$-$P_0$) between the pressure $P_0$ applied to the electrode assembly in the discharged state and the pressure $P_1$ applied to the electrode assembly in the charged state is as small as 0.90 MPa or less, the decrease in the conductivity of the negative electrode and the outflow of the electrolyte solution from the gap of the negative electrode hardly occur even in the charged state. From the above, it is presumed that according to the energy storage device according to another aspect of the present invention, although a load is applied to the electrode assembly, the decrease in discharge capacity at a high current density is suppressed.

An energy storage device according to an embodiment of the present invention, an energy storage apparatus, a method for manufacturing the energy storage device, and other embodiments will be described in detail. The names of the constituent members (constituent elements) used in the embodiments may be different from the names of the constituent members (constituent elements) used in the background art.

<Energy storage device>

An energy storage device according to an embodiment of the present invention includes: an electrode assembly including a positive electrode, a negative electrode, and a separator; an electrolyte solution; and a case that houses the electrode assembly and the electrolyte solution. The positive electrode and the negative electrode are stacked with a separator interposed therebetween. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The electrolyte solution is present with the positive electrode, negative electrode, and separator impregnated with the electrolyte. A nonaqueous electrolyte solution secondary battery (hereinafter, also simply referred to as a "secondary battery") will be described as an example of the energy storage device.

(Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of $10^7$ $\Omega \cdot$cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H4160 (2006).

The average thickness of the positive substrate is preferably 3 pm or more and 50 pm or less, more preferably 5 pm or more and 40 pm or less, still more preferably 8 pm or more and 30 pm or less, and particularly preferably 10 pm or more and 25 pm or less. By setting the average thickness of the positive substrate to the above range, it is possible to increase the energy density per volume of a secondary battery while increasing the strength of the positive substrate.

The intermediate layer is a layer arranged between the positive substrate and the positive active material layer. The intermediate layer includes a conductive agent such as carbon particles to reduce contact resistance between the positive substrate and the positive active material layer. The configuration of the intermediate layer is not particularly limited, and includes, for example, a binder and a conductive agent.

The positive active material layer includes a positive active material. The positive active material layer contains optional components such as a conductive agent, a binder (binding agent), a thickener, a filler, or the like as necessary.

The positive active material can be appropriately selected from known positive active materials. As the positive active material for a lithium ion secondary battery, a material capable of occluding and releasing lithium ions is typically used. Examples of the positive active material include lithium-transition metal composite oxides that have an $\alpha$-$NaFeO_2$-type crystal structure, lithium-transition metal composite oxides that have a spinel-type crystal structure, polyanion compounds, chalcogenides, and sulfur. Examples of the lithium-transition metal composite oxides that have an $\alpha$-$NaFeO_2$-type crystal structure include $Li[Li_xNi_{(1-x)}]O_2$ ($0 \leq x < 0.5$), $Li[Li_xNi_\gamma Co_{(1-x-\gamma)}]O_2$ ($0 \leq x < 0.5$, $0 < \gamma < 1$), $Li[Li_xCo_{(1-x)}]O_2$ ($0 \leq x < 0.5$), $Li[Li_xNi_\gamma Mn_{(1-x-\gamma)}]O_2$ ($0 \leq x < 0.5$, $0 < \gamma < 1$), $Li[Li_xNi_\gamma Mn_\beta Co_{(1-x-\gamma-\beta)}]O_2$ ($0 \leq x < 0.5$, $0 < \gamma$, $0 < \beta$, $0.5 < y + \beta < 1$), and $Li[Li_xNi_\gamma Co_\beta Al_{(1-x-\gamma-\beta)}]O_2$ ($0 \leq x < 0.5$, $0 < \gamma$, $0 < \beta$, $0.5 < y + \beta < 1$). Examples of the lithium-transition metal composite oxides that have a spinel-type crystal structure include $Li_xMn_2O_4$ and $Li_xNi_\gamma Mn_{(2-\gamma)}O_4$. Examples of the poly-anion compounds include $LiFePO_4$, $LiMnPO_4$, $LiNiPO_4$, $LiCoPO_4$, $Li_3V_2(PO_4)_3$, $Li_2MnSiO_4$, and $Li_2CoPO_4F$. Examples of the chalcogenides include a titanium disulfide, a molybdenum disulfide, and a molybdenum dioxide. Some of atoms or polyanions in these materials may be substituted with atoms or anion species composed of other elements. The surfaces of these materials may be coated with other materials. In the positive active material layer, one of these materials may be used singly, or two or more thereof may be used in mixture.

The positive active material is usually a particle (powder). The average particle size of the positive active material is preferably 0.1 pm or more and 20 pm or less, for example. By setting the average particle size of the positive active material to be equal to or more than the lower limit mentioned above, the positive active material is easily manufactured or handled. By setting the average particle size of the positive active material to be equal to or less than the upper limit mentioned above, the electron conductivity of the positive active material layer is improved. In the case of using a composite of the positive active material and another material, the average particle size of the composite is regarded as the average particle size of the positive active material. The "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher or a classifier is used to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As a classification method, a sieve or a wind force classifier or the like is used based on the necessity both in dry manner and in wet manner.

The content of the positive active material in the positive active material layer is preferably 50% by mass or more and 99% by mass or less, more preferably 70% by mass or more and 98% by mass or less, and still more preferably 80% by mass or more and 95% by mass or less. By setting the content of the positive active material in the above range, it is possible to achieve both high energy density and productivity of the positive active material layer.

The conductive agent is not particularly limited as long as it is a conductive material. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. In addition, these materials may be used in combination. For example, a material obtained by compositing carbon black with CNT may be used. Among them, carbon black is preferable, an in particular, acetylene black is preferable, from the viewpoint of electron conductivity and coatability.

The content of the conductive agent in the positive active material layer is preferably 1% by mass or more and 10% by mass or less, more preferably 3% by mass or more and 9% by mass or less. By setting the content of the conductive agent in the above range, the energy density of the secondary battery can be enhanced.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as ethylene-propylene-diene rubber (EPDM), sulfonated EPDM, styrene-butadiene rubber (SBR), and fluororubber; and polysaccharide polymers.

The content of the binder in the positive active material layer is preferably 1% by mass or more and 10% by mass or less, more preferably 3% by mass or more and 9% by mass or less. By setting the content of the binder in the above range, the active material can be stably held.

Examples of the thickener include polysaccharide polymers such as carboxymethylcellulose (CMC), and methylcellulose. When the thickener has a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof.

The positive active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the conductive agent, the binder, the thickener, and the filler.

(Negative electrode)

The negative electrode has a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include rolled copper foils and electrolytic copper foils.

The average thickness of the negative substrate is preferably 2 pm or more and 35 pm or less, more preferably 3 pm or more and 30 pm or less, still more preferably 4 pm or more and 25 pm or less, and particularly preferably 5 pm or more and 20 pm or less. When the average thickness of the negative substrate is within the above range, it is possible to enhance the energy density per volume of a secondary battery while increasing the strength of the negative substrate.

The negative active material layer contains a negative active material. The negative active material layer contains optional components such as a conductive agent, a binder, a thickener, and a filler, if necessary. The optional components such as a conductive agent, a binder, a thickener, and a filler can be selected from the materials exemplified for the positive electrode.

The negative active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

The negative active material can be appropriately selected from known negative active materials. As the negative active material for a lithium ion secondary battery, a material capable of absorbing and releasing lithium ions is usually used. Examples of the negative active material include metallic Li; metals or metalloids such as Si and Sn; metal oxides or metalloid oxides such as a Si oxide, a Ti oxide, and a Sn oxide; titanium-containing oxides such as $Li_4Ti_5O_{12}$, $LiTiO_2$, and $TiNb_2O_7$; a polyphosphoric acid compound; silicon carbide; and carbon materials such as graphite and non-graphitic carbon (easily graphitizable carbon or hardly graphitizable carbon). Among these materials, graphite and non-graphitic carbon are preferable. In the negative active material layer, one of these materials may be used singly, or two or more of these materials may be used in mixture.

The term "graphite" refers to a carbon material in which an average lattice spacing ($d_{002}$) of the (002) plane determined by an X-ray diffraction method before charge-discharge or in a discharged state is 0.33 nm or more and less than 0.34 nm. Examples of the graphite include natural graphite and artificial graphite. Artificial graphite is preferable from the viewpoint that a material having stable physical properties can be obtained.

The term "non-graphitic carbon" refers to a carbon material in which the average grid spacing ($d_{002}$) of the (002) plane determined by the X-ray diffraction method before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol derived material.

In this regard, the "discharged state" of the carbon material means a state discharged such that lithium ions that can be occluded and released in association with charge-discharge are sufficiently released from the carbon material that is the negative active material. For example, the "discharged state" refers to a state where an open circuit voltage is 0.7 V or more in a monopolar battery in which a negative electrode containing a carbon material as a negative active material is used as a working electrode and metal Li is used as a counter electrode.

The "hardly graphitizable carbon" refers to a carbon material in which the $d_{002}$ is 0.36 nm or more and 0.42 nm or less.

The "easily graphitizable carbon" refers to a carbon material in which the $d_{002}$ is 0.34 nm or more and less than 0.36 nm.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or greater than the above lower limit, the negative active material is easily produced or handled. By setting the average particle size of the negative active material to be equal to or less than the above upper limit, the electron conductivity of the positive active material layer is improved. A crusher or a classifier is used to obtain a powder with a predetermined particle size. A crushing method and a classification method can be selected from, for example, the methods exemplified for the positive electrode. When the negative active material is a metal such as metal Li, the negative active material may have the form of foil.

The content of the negative active material in the negative active material layer is preferably 60% by mass or more and 99% by mass or less, more preferably 90% by mass or more and 98% by mass or less. By setting the content of the negative active material in the above range, it is possible to achieve both high energy density and productivity of the negative active material layer.

(Separator)

The separator can be appropriately selected from known separators. As the separator, for example, a separator composed of only a substrate layer, a separator in which a coating layer containing particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid or the like is preferable from the viewpoint of resistance to oxidative decomposition. As the substrate layer of the separator, a material obtained by combining these resins may be used. The substrate layer may include two or more layers.

From the viewpoint of heat resistance and the like, the particles contained in the coating layer preferably have a mass loss of 5% or less when the temperature is raised from room temperature to 500°C in the air atmosphere of 1 atm, and more preferably have a mass loss of 5% or less when the temperature is raised from room temperature to 800°C. Examples of materials that have a mass loss equal to or less than a predetermined value include inorganic compounds. The coating layer may be an inorganic particle layer in which particles of an inorganic compound are used as the particles. Examples of the inorganic compounds include oxides such as iron oxide, silicon oxide, aluminum oxide, titanium dioxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, the silicon oxide, aluminum oxide, or aluminosilicate is preferable from the viewpoint of the safety of the energy storage device.

A porosity of the separator is preferably 80 vol% or less from the viewpoint of strength, and is preferably 20 vol% or more from the viewpoint of discharge performance. The term "porosity" herein is a volume-based value, and means a value measured with a mercury porosimeter.

The air permeability resistance of the separator is preferably 50 sec/100 mL or more and 250 sec/100 mL or less, more preferably 80 sec/100 mL or more and 240 sec/100 mL or less, and still more preferably 120 sec/100 mL or more and 230 sec/100 mL or less. When the air permeability resistance of the separator is within the above range, the decrease in discharge capacity at a high current density when a sufficient load is applied to the electrode assembly is further suppressed. In particular, when the air permeability resistance of the separator is equal to or less than the above upper limit, sufficient ion permeability can be secured even in a state where the separator is compressed, and therefore, the decrease in discharge capacity at a high current density is further suppressed.

The strain A obtained when the separator is compressed in the thickness direction under an environment of 45°C at a pressure of 2 MPa is preferably 0.05 or more and 0.3 or less, more preferably 0.10 or more and 0.25 or less, and still more preferably 0.20 or less in some cases. When the strain A is equal to or more than the above lower limit, sufficient compression occurs when a load is applied to the separator in the thickness direction, and therefore, the decrease in discharge capacity at a high current density when a sufficient load is applied to the electrode assembly is further suppressed. On the other hand, in a case where the strain A is equal to or less than the above upper limit, when a load is applied to the separator in the thickness direction, the decrease in ion permeability due to excessive compression is suppressed, and the decrease in discharge capacity at a high current density when a sufficient load is applied to the electrode assembly is further suppressed. The strain A can be adjusted by the material, structure, porosity, and the like of the separator.

The average thickness of the separator is preferably 3 pm or more and 100 pm or less, more preferably 5 pm or more and 50 pm or less, and still more preferably 10 pm or more and 30 pm or less. When the average thickness of the separator is equal to or more than the above lower limit, it is possible to reliably electrically isolate the positive electrode and the negative electrode from each other, it is possible to sufficiently absorb the increase in the thickness of the negative electrode that expands with charge by compression of the separator, and it is possible to sufficiently reduce the pressure difference $(P_1-P_0)$. When the average thickness of the separator is equal to or less than the above upper limit, the energy density of the secondary battery can be increased.

(Load on electrode assembly)

The electrode assembly is in the state where a load is applied in all states from the discharged state to the charged state. The load on the electrode assembly is a load in the thickness direction of each of the positive electrode, the negative electrode, and the separator which are stacked, that is, in a stacking direction. The electrode assembly may have a portion to which no load is applied, such as an end of the electrode assembly. In the secondary battery, since a load is applied to the electrode assembly as described above, the energy density can be increased, and the discharge capacity retention ratio in the charge-discharge cycle can be increased. Although the reason why the discharge capacity retention ratio is increased by applying a load to the electrode assembly is not clear, it is presumed that, for example, the gap in the electrode assembly is reduced, and gas generated by charging and discharging is less likely to be accumulated in the electrode assembly. The load can be applied to the electrode assembly by a restraining member or the like described later.

In an embodiment of the present invention, the difference $(P_1-P_0)$ between the pressure $P_0$ applied to the electrode assembly in the discharged state and the pressure $P_1$ applied to the electrode assembly in the charged state is 0.90 MPa or less. The pressure difference $(P_1-P_0)$ is preferably 0.85 MPa or less, and more preferably 0.80 MPa or less. When the pressure difference $(P_1-P_0)$ is equal to or less than the above upper limit, the decrease in discharge capacity at a high current density is suppressed. The lower limit of the pressure difference $(P_1-P_0)$ may be 0 MPa, 0.20 MPa, 0.40 MPa, or 0.60 MPa.

The pressure $P_0$ applied to the electrode assembly in the discharged state may be, for example, 0.10 MPa or more and 2.00 MPa or less, and is preferably 0.40 MPa or more and 1.40 MPa or less, more preferably 0.60 MPa or more and 1.10 MPa or less, and still more preferably 0.80 MPa or more and 1.00 MPa or less in some cases. By setting the pressure $P_0$ to be equal to or more than the above lower limit, the energy density, the discharge capacity retention ratio in the charge-discharge cycle, and the like can be increased. On the other hand, by setting the pressure $P_0$ to be equal to or less than the above upper limit, application of an excessive pressure to the electrode assembly in all states from the discharged state to the charged state is suppressed, and the decrease in discharge capacity at a high current density is further suppressed.

The pressure $P_1$ applied to the electrode assembly in the charged state may be, for example, 0.50 PMa or more and 2.90 MPa or less, and is preferably 0.80 MPa or more and 2.30 MPa or less, more preferably 1.30 MPa or more and 2.00 MPa or less, and still more preferably 1.40 MPa or more and 1.60 MPa or less in some cases. By setting the pressure $P_1$ to be equal to or more than the above lower limit, the energy density, the discharge capacity retention ratio in the charge-discharge cycle, and the like can be increased. On the other hand, by setting the pressure $P_1$ to be equal to or less than the above upper limit, application of an excessive pressure to the electrode assembly in the charged state is suppressed, and the decrease in discharge capacity at a high current density is further suppressed.

In an embodiment of the present invention, the pressure $P_0$ (MPa) applied to the electrode assembly in the discharged state and the strain A obtained when the separator is compressed in the thickness direction under an environment of 45°C at a pressure of 2 MPa satisfy the following Formula 1.

$$P_0 (1 - A) < 1.2 \; (\text{MPa}) \; ... \; 1$$

The upper limit of $P_0$ (1-A) is preferably 1.1, and more preferably 1.0, 0.9, 0.8, or 0.7 in some cases. When $P_0$ (1-A) is less than the above upper limit or equal to or less than the above upper limit, the increase in pressure applied to the electrode assembly with charge, that is, the pressure difference ($P_1$-$P_0$) is reduced, and therefore, the decrease in discharge capacity at a high current density is suppressed. The lower limit of $P_0$ (1-A) is more than 0, and may be 0.1, 0.3, 0.5, or 0.7.

(Nonaqueous electrolyte solution)

The nonaqueous electrolyte solution secondary battery includes a nonaqueous electrolyte solution as a nonaqueous electrolyte. The nonaqueous electrolyte solution can be appropriately selected from known nonaqueous electrolyte solutions. The nonaqueous electrolyte solution usually contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, those in which some hydrogen atoms contained in these compounds are substituted with halogen may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among them, EC is preferable.

Examples of the chain carbonate include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among them, EMC is preferable.

As the nonaqueous solvent, the cyclic carbonate or the chain carbonate is preferably used, more preferably, the cyclic carbonate and the chain carbonate are used in combination. The use of the cyclic carbonate allows the promoted dissociation of the electrolyte salt to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate: chain carbonate) is preferably in a range from 5 : 95 to 50 : 50, for example.

The electrolyte salt can be appropriately selected from known electrolyte salts. Examples of the electrolyte salt include a lithium salt, a sodium salt, a potassium salt, a magnesium salt, and an onium salt. Among these, a lithium salt is preferable.

Examples of the lithium salt include inorganic lithium salts such as $LiPF_6$, $LiPO_2F_2$, $LiBF_4$, $LiClO_4$, and $LiN(SO_2F)_2$, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$. Among these, inorganic lithium salts are preferable, and $LiPF_6$ is more preferable.

The content of the electrolyte salt in the nonaqueous electrolyte solution is, at 20°C under 1 atm, preferably 0.1 $mol/dm^3$ or more and 2.5 $mol/dm^3$ or less, more preferably 0.3 $mol/dm^3$ or more and 2.0 $mol/dm^3$ or less, still more preferably 0.5 $mol/dm^3$ or more and 1.7 $mol/dm^3$ or less, particularly preferably 0.7 $mol/dm^3$ or more and 1.5 $mol/dm^3$ or less. When the content of the electrolyte salt is in the above range, it is possible to increase the ionic conductivity of the nonaqueous electrolyte solution.

The nonaqueous electrolyte solution may contain an additive, besides the nonaqueous solvent and the electrolyte salt. Examples of the additive include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, and lithium difluorophosphate. One of these additives may be used, or two or more thereof may be used in mixture.

The content of the additive contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to a total mass of the nonaqueous electrolyte solution. The content of the additive falls within the above range, thereby making it possible to improve capacity retention performance or cycle performance after high-temperature storage, and to further improve safety.

(Case)

The case is a sealed case that houses the electrode assembly and the nonaqueous electrolyte solution. The material of the case may be any material as long as it has sealability capable of sealing the electrode assembly and the nonaqueous electrolyte solution and strength capable of protecting the electrode assembly, and may be, for example, resin or metal. The case may be, for example, a case such as a flexible bag body formed of a composite film or the like in which a heat-weldable resin and a metal foil are stacked.

The shape of the energy storage device of the present embodiment is not particularly limited, and examples thereof include cylindrical batteries, prismatic batteries, flat batteries, coin batteries and button batteries.

Fig. 1 illustrates an energy storage device 1 as an example of a prismatic battery. Fig. 1 is a view illustrating the inside of a case in a perspective manner. An electrode assembly 2 including a positive electrode and a negative electrode wound with a separator interposed therebetween is housed in a prismatic battery case 3. An electrolyte solution (not illustrated) such as a nonaqueous electrolyte solution is further stored in the case 3. The positive electrode is electrically connected to a positive electrode terminal 4 via a positive electrode lead 41. The negative electrode is electrically connected to a negative electrode terminal 5 via a negative electrode lead 51.

The load can be applied to the electrode assembly 2 in the energy storage device 1 of Fig. 1 by, for example, a restraining member (not illustrated) which pressurizes the case 3 from the outside. The restraining member may be a binding member that binds the shape of the case 3. The restraining member (binding member) is provided so as to sandwich the electrode assembly 2 from both surfaces (a surface on a front side and a surface on a depth side in Fig. 1) in the thickness direction (stacking direction: Y direction in Fig. 1) with the case 3 interposed between the restraining member and the electrode assembly 2 and to pressurize the case 3. Both surfaces of the electrode assembly 2 are in contact with an inner surface of the case 3 directly or with another member (not illustrated) interposed therebetween. Thus, a load is applied to the electrode assembly 2 by pressurizing the case 3. Both surfaces of the electrode assembly 2 are preferably in contact with the inner surface of the case 3 directly or with another member (not illustrated) interposed therebetween in a state where the case 3 is not pressurized. Examples of the restraining member (binding member) include a binding band and a metallic frame. As illustrated in Fig. 2, the plurality of energy storage devices 1 may be arranged in a row in the stacking direction (Y direction in Fig. 1, horizontal direction in Fig. 2) of the electrode assembly 2, and may be fixed by using a binding member 21 such as a frame in a state where the plurality of energy storage devices 1 are pressurized from both ends in the stacking direction.

As a binding member for binding the shape of the energy storage device, a member for binding in a constant size is known. The term "binding in a constant size" means that the energy storage device is bound such that the size and shape of the energy storage device do not substantially change. When the binding member for binding in a constant size is used, the binding member and the energy storage device are not substantially deformed after the binding member is attached to the energy storage device, and therefore, there is an advantage that designing becomes easy. However, when the binding member for binding in a constant size is used, a load applied to the electrode assembly tends to increase due to expansion of the energy storage device at the time of charging, and therefore, in general, the pressure difference $(P_1-P_0)$ tends to increase. For this reason, when an embodiment of the present invention is applied to the energy storage device in which the binding member for binding in a constant size is used, the effect of suppressing the decrease in discharge capacity at a high current density can be particularly sufficiently obtained.

<Energy storage apparatus>

The energy storage device of the present embodiment can be mounted as an energy storage unit (battery module) configured by assembling a plurality of energy storage devices on a power source for an automobile such as electric vehicles (EV), hybrid vehicles (HEV), and plug-in hybrid vehicles (PHEV), a power source for electronic devices such as personal computers and communication terminals, or a power source for power storage, or the like. In this case, the technique of the present invention may be applied to at least one energy storage device included in the energy storage apparatus.

Fig. 2 shows an example of an energy storage apparatus 30 formed by assembling energy storage units 20 in each of which two or more electrically connected energy storage devices 1 are assembled. In the energy storage unit 20, the plurality of energy storage devices 1 are arranged in the thickness direction with no gap therebetween, and the energy storage devices 1 are bound by the binding member 21 having a constant size such that the thickness is maintained constant and the energy storage devices 1 are pressurized from the thickness direction (horizontal direction in Fig. 2). The energy storage apparatus 30 may include a busbar (not illustrated) for electrically connecting two or more energy storage devices 1, a busbar (not illustrated) for electrically connecting two or more energy storage units 20, and the like. The energy storage unit 20 or the energy storage apparatus 30 may include a state monitor (not illustrated) for monitoring the state of one or more energy storage devices.

<Method for manufacturing energy storage device>

A method for manufacturing the energy storage device according to the present embodiment can be appropriately selected from known methods. The manufacturing method includes, for example, providing an electrode assembly, providing an electrolyte solution such as a nonaqueous electrolyte solution, and housing the electrode assembly and the electrolyte solution in a case. The preparation of the electrode assembly includes: preparing a positive electrode and a negative electrode, and forming an electrode assembly by stacking or winding the positive electrode and the negative electrode with a separator interposed therebetween.

Housing the electrolyte solution in a case can be appropriately selected from known methods. For example, the electrolyte solution may be injected from an injection port formed in the case, and then the injection port may be sealed. The manufacturing method may further include attaching a restraining member such as a binding member. A method for manufacturing an energy storage apparatus including a plurality of energy storage devices may include attaching a restraining member such as a binding member to the plurality of energy storage devices.

<Other embodiments>

It is to be noted that the energy storage device according to the present invention is not to be considered limited to the embodiment mentioned above, and various changes may be made without departing from the scope of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. In addition, a well-known technique can be added to the configuration according to one embodiment.

In the embodiment, a case where the energy storage device is used as a nonaqueous electrolyte solution secondary battery (for example, lithium ion secondary battery) that can be charged and discharged has been described, but the type, shape, dimensions, capacity, and the like of the energy storage device are arbitrary. The present invention can also be applied to capacitors such as various secondary batteries, electric double layer capacitors, or lithium ion capacitors.

EXAMPLES

Hereinafter, the present invention will be described in more detail with reference to Examples, but the present invention is not limited to the following Examples.

[Example 1]

(Preparation of positive electrode)

A positive composite paste was prepared with the use of $LiNi_{0.6}Co_{0.2}Mn_{0.2}O_2$ as a positive active material, acetylene black (AB) as a conductive agent, a polyvinylidene fluoride (PVDF) as a binder, and an N-methylpyrrolidone (NMP) as a dispersion medium. It is to be noted that the mass ratios of the positive active material, AB, and PVDF were set to be 90 : 5 : 5 (in terms of solid content). The positive composite paste was applied to both surfaces of an aluminum foil as a positive substrate, and dried. Thereafter, roll pressing was performed to obtain a positive electrode.

(Preparation of negative electrode)

Graphite as a negative active material, a styrene-butadiene rubber (SBR) as a binder, carboxymethyl cellulose (CMC) as a thickener, and water as a dispersion medium were mixed to prepare a negative composite paste. The mass ratio of the negative active material, SBR, and CMC was set to be 96 : 2 : 2 (in terms of solid content). The negative composite paste was applied to both surface of a copper foil as a negative substrate, and dried. Thereafter, roll pressing was performed to obtain a negative electrode.

(Nonaqueous electrolyte solution)

$LiPF_6$ was dissolved at a concentration of 1.2 mol/dm$^3$ in a solvent obtained by mixing an ethylene carbonate, a propylene carbonate, and an ethyl methyl carbonate at a volume ratio of 20 : 10 : 70 to obtain a nonaqueous electrolyte solution.

(Separator)

As the separator, a separator A in which a coating layer formed of inorganic particles and a binder was stacked on one surface of a substrate layer formed from a polyethylene porous resin film was used. The average thickness of the separator A was 21 pm, the air permeability resistance was 90 seconds/100 mL, and the strain A (strain obtained when the separator was compressed in the thickness direction under an environment of 45°C at a pressure of 2 MPa) was 0.18.

(Assembly of energy storage device)

The positive electrode, the negative electrode, and the separator A were stacked to obtain an electrode assembly. The electrode assembly was sealed in a case formed of a composite film in which a heat-weldable resin and an aluminum foil were stacked, and a nonaqueous electrolyte solution was injected to seal the case. The energy storage device of Example 1 was obtained in a state where the binding member for binding in a constant size was attached and a load was applied such that the pressure $P_0$ applied to the electrode assembly in the discharged state was 1.31 MPa.

[Examples 2 to 7, Comparative Examples 1 to 4]

Each energy storage device of Examples 2 to 7 and Comparative Examples 1 to 4 was obtained similarly to Example 1 except that the kind of the separator used and the pressure $P_0$ applied to the electrode assembly in the discharged state were changed as shown in Table 1.
Table 1 shows the material of the substrate layer of each separator, the presence or absence of the coating layer, the average thickness, the air permeability resistance, the strain A (strain obtained when the separator was compressed in the thickness direction under an environment of 45°C at a pressure of 2 MPa), and the value of $P_0$ (1-A). For the separators B and C, the strain A was not measured. In Table 1, PE represents polyethylene, and PP represents polypropylene. PP/PE/PP indicates a substrate layer having a three-layer structure in which PP, PE, and PP are stacked in this order. Each coating layer is a layer formed of inorganic particles and a binder.

[Evaluation]

(Measurement of pressure $P_1$ applied to electrode assembly in charged state)

Each energy storage device of Examples and Comparative Examples was subjected to an initial charge-discharge step at 25°C under predetermined conditions, then subjected to constant current charge at 45°C with a current of 1.0 C until the voltage became 4.25 V, and then subjected to constant voltage charge at 4.25 V to be brought into the charged state. The charge time was set to 3 hours by combining the constant current charge and the constant voltage charge. Then, the pressure $P_1$ applied to the electrode assembly in the charged state was measured. The measured pressure $P_1$ and the pressure difference ($P_1$-$P_0$) are shown in Table 1.

(Measurement of discharge capacity at high current density)

Each energy storage device of Examples 1 to 4 and Comparative Examples 1 to 4 which were brought into the charged state by the measurement of the pressure $P_1$ was subjected to constant current discharge with a current of 3.0 C at 45°C until the voltage became 2.75 V, and the discharge capacity X was obtained. Furthermore, each energy storage device of Examples 1 to 4 and Comparative Examples 1 to 4 was brought into a state where a load was not substantially applied to the electrode assembly, and a discharge capacity Y with a current of 3.0 C was obtained similarly to the above. The percentage of the discharge capacity X with respect to the discharge capacity Y in each energy storage device was obtained as a discharge capacity ratio (%). The results are shown in Table 1.

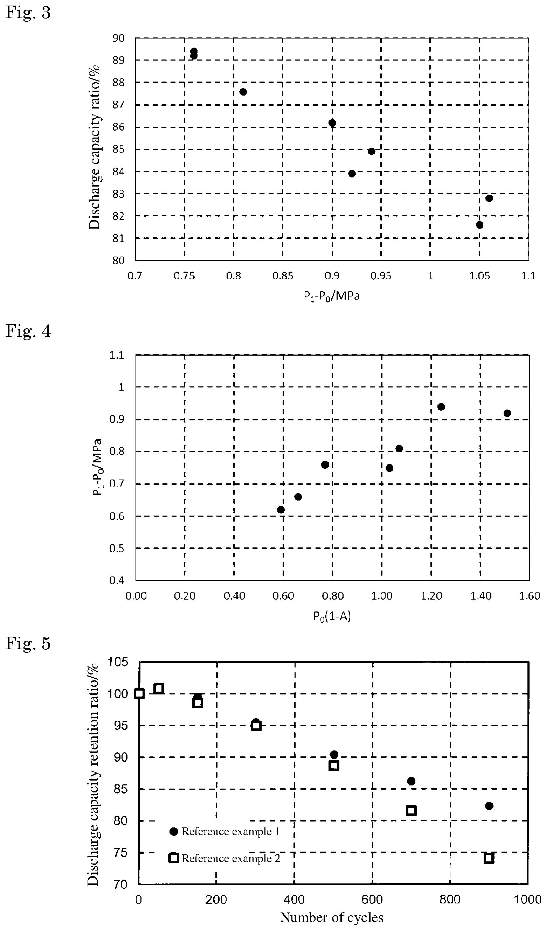

Fig. 3 shows a relationship between the pressure difference ($P_1$-$P_0$) and the discharge capacity ratio in each energy storage device of Examples 1 to 4 and Comparative Examples 1 to 4. Fig. 4 shows a relationship between $P_0$ (1-A) and the pressure difference ($P_1$-$P_0$) in each energy storage device of Examples 1 and 4 to 7 and Comparative Examples 1 and 4.

[Table 1]

| | Separator | | | | | | $P_C$ /MPa | $P_0(1-A)$ | $P_1$ /MPa | $P_1-P_0$ /MPa | Discharge capacity ratio /% |
| | Type | Substrate layer | Coating layer | Average thickness /$\mu$m | Air permeability resistance /sec/100 mL | Strain A | | | | | |
|---|---|---|---|---|---|---|---|---|---|---|---|
| Example 1 | A | PE | Presence | 21 | 90 | 0.18 | 1.31 | 1.07 | 2.12 | 0.81 | 87.6 |
| Example 2 | B | PE | Presence | 12 | 90 | - | 1.37 | - | 2.27 | 0.90 | 86.2 |
| Example 3 | C | PE | Presence | 14 | 160 | - | 0.82 | - | 1.58 | 0.76 | 89.2 |
| Example 4 | D | PP/PE/PP | Presence | 20 | 210 | 0.12 | 0.88 | 0.77 | 1.64 | 0.76 | 89.4 |
| Example 5 | A | PE | Presence | 21 | 90 | 0.18 | 0.80 | 0.66 | 1.46 | 0.66 | - |
| Example 6 | E | PE | Absence | 15 | 80 | 0.22 | 0.75 | 0.59 | 1.37 | 0.62 | - |
| Example 7 | E | PE | Absence | 15 | 80 | 022 | 1.32 | 1.03 | 2.07 | 0.75 | - |
| Comparative Example 1 | A | PE | Presence | 21 | 90 | 0.18 | 1.84 | 1.51 | 2.76 | 0.92 | 83.9 |
| Comparative Example 2 | B | PE | Presence | 12 | 90 | - | 1.89 | - | 2.95 | 1.06 | 82.8 |
| Comparative Example 3 | C | PE | Presence | 14 | 160 | - | 1.91 | - | 296 | 1.05 | 81.6 |
| Comparative Example 4 | D | PP/PE/PP | Presence | 20 | 210 | 0.12 | 1.41 | 1.24 | 2.35 | 0.94 | 84.9 |

As shown in Table 1 and Fig. 3, the discharge capacity ratio had a high correlation with the pressure difference $(P_1-P_0)$ between the charged state and the discharged state, and when the pressure difference $(P_1-P_0)$ was 0.90 MPa or less, the discharge capacity ratio was 86% or more. That is, it is found that when the pressure difference $(P_1-P_0)$ is 0.90 MPa or less, the decrease in discharge capacity at a high current density in the energy storage device to which a load is applied to the electrode assembly can be sufficiently suppressed.

As shown in Table 1 and Fig. 4, the pressure difference $(P_1-P_0)$ between the charged state and the discharged state had a high correlation with $P_0$ (1-A), and when $P_0$ (1-A) was less than 1.2, the pressure difference $(P_1-P_0)$ was 0.90 MPa or less. That is, it is found that when $P_0$ (1-A) was less than 1.2, the pressure difference $(P_1-P_0)$ is 0.90 MPa or less, so that the decrease in discharge capacity at a high current density in the energy storage device to which a load is applied to the electrode assembly can be sufficiently suppressed.

[Reference Example 1]

In order to confirm the difference in the discharge capacity retention ratio depending on the presence or absence of a load on the electrode assembly, the following Reference Examples were carried out.

(Preparation of positive electrode)

A positive composite paste was prepared with the use of $LiNi_{0.6}Co_{0.2}Mn_{0.2}O_2$ as a positive active material, acetylene black (AB) as a conductive agent, a polyvinylidene fluoride (PVDF) as a binder, and an N-methylpyrrolidone (NMP) as a dispersion medium. It is to be noted that the mass ratios of the positive active material, AB, and PVDF were set to be 90 : 5 : 5 (in terms of solid content). The positive composite paste was applied to both surfaces of an aluminum foil as a positive substrate, and dried. Thereafter, roll pressing was performed to obtain a positive electrode.

(Preparation of negative electrode)

Graphite as a negative active material, a styrene-butadiene rubber (SBR) as a binder, carboxymethyl cellulose (CMC) as a thickener, and water as a dispersion medium were mixed to prepare a negative composite paste. The mass ratio of the negative active material, SBR, and CMC was set to be 96 : 2 : 2 (in terms of solid content). The negative composite paste was applied to both surface of a copper foil as a negative substrate, and dried. Thereafter, roll pressing was performed to obtain a negative electrode.

(Nonaqueous electrolyte solution)

$LiPF_6$ was dissolved at a concentration of 1.0 $mol/dm^3$ in a solvent obtained by mixing an ethylene carbonate, a propylene carbonate, and an ethyl methyl carbonate at a volume ratio of 25 : 5 : 70 to obtain a nonaqueous electrolyte solution.

(Separator)

As the separator, a separator (total average thickness 16 pm) in which a coating layer (thickness 4 pm, porosity 70 vol%) formed of inorganic particles and a binder was stacked on one surface of a substrate layer (average thickness 12 pm, porosity 40 vol%) including a porous resin film made of polyolefin was used.

(Assembly of energy storage device)

The positive electrode, the negative electrode, and the separator were stacked to obtain an electrode assembly. The electrode assembly was sealed in a case, and a nonaqueous electrolyte solution was injected to seal the case. The energy storage device of Reference Example 1 was obtained in a state where the binding member for binding in a constant size was attached and a load was applied such that the pressure $P_0$ applied to the electrode assembly in the discharged state was 0.1 MPa.

[Reference Example 2]

An energy storage device of Reference Example 2 was obtained similarly to Reference Example 1 except that a binding member for binding in a constant size was attached so that no load was applied to the electrode assembly.

(Charge-discharge cycle test)

Each energy storage device of Reference Examples 1 and 2 was subjected to the initial charge-discharge step at 25°C under predetermined conditions, and then subjected to the following charge-discharge cycle test. The energy storage device was subjected to constant current charge at 60°C with a current of 1.0 C until the voltage became 4.25 V, and then subjected to constant voltage charge at 4.25 V With regard to the charge termination conditions, charge was performed until the total charge time reached 3 hours. Thereafter, a pause period of 10 minutes was provided. Constant current discharge was performed with a current of 1.0 C until the voltage became 2.75 V, and then a pause period of 10 minutes was provided. The charging and discharging steps constituted one cycle, and the cycle was performed 900 cycles. Fig. 5 shows a graph showing the discharge capacity retention ratio based on the discharge capacity at the first cycle in the charge-discharge cycle test.

As illustrated in Fig. 5, it can be seen that the energy storage device of Reference Example 1 in which the binding member for binding in a constant dimension is attached so that a load is applied to the electrode assembly has a high discharge capacity retention ratio in the charge-discharge cycle as compared with the energy storage device of Reference Example 2 in which the binding member for binding in a constant size is attached so that no load is applied to the electrode assembly.

INDUSTRIAL APPLICABILITY

The present invention can be applied to an energy storage device used as a power source for electronic devices such as personal computers and communication terminals, motor vehicles, and the like.

DESCRIPTION OF REFERENCE SIGNS

1: Energy storage device
2: Electrode assembly
3: Case
4: Positive electrode terminal
41: Positive electrode lead
5: Negative electrode terminal
51: Negative electrode lead
20: Energy storage unit
21: Binding member
30: Energy storage apparatus

**Claims**

1. An energy storage device comprising:

   an electrode assembly in which a positive electrode and a negative electrode are stacked with a separator interposed between the positive electrode and the negative electrode;
   an electrolyte solution; and
   a case which houses the electrode assembly and the electrolyte solution,
   wherein the electrode assembly is in a state where a load is applied, a pressure $P_0$ (MPa) applied to the electrode assembly in a discharged state, and a strain A obtained when the separator is compressed in a thickness direction under an environment of 45°C at a pressure of 2 MPa satisfy the following Formula 1:

$$P_0 \, (1 - A) < 1.2 \, (\mathrm{MPa}) \ldots 1.$$

2. An energy storage device having a difference between the pressure $P_0$ and pressure $P_1$ applied to the electrode assembly in a charged state of 0.90 MPa or less.

3. The energy storage device according to claim 1 or 2, wherein the strain A is 0.05 or more and 0.3 or less.

**4.** The energy storage device according to claim 1, 2, or 3, wherein the separator has an air permeability resistance of 250 seconds/100 mL or less.

**5.** The energy storage device according to any one of claims 1 to 4, wherein the pressure $P_0$ is 0.40 MPa or more and 1.40 MPa or less.

**6.** The energy storage device according to any one of claims 1 to 5, wherein the pressure $P_1$ is 1.30 MPa or more and 2.00 MPa or less.

**7.** The energy storage device according to any one of claims 1 to 6, wherein an average thickness of the separator is 3 pm or more and 100 pm or less.

**8.** The energy storage device according to any one of claims 1 to 7, wherein the separator includes a substrate layer and a coating layer containing particles and a binder formed on one surface or both surfaces of the substrate layer.

**9.** An energy storage apparatus comprising the energy storage device according to any one of claims 1 to 8 which is bound in a constant size.

**10.** An automobile comprising the energy storage device according to any one of claims 1 to 8.

**11.** A power source for an electronic device comprising the energy storage device according to any one of claims 1 to 8.

**12.** An energy storage device comprising:

an electrode assembly in which a positive electrode and a negative electrode are stacked with a separator interposed between the positive electrode and the negative electrode;
an electrolyte solution; and
a case which houses the electrode assembly and the electrolyte solution,
wherein the electrode assembly is in a state where a load is applied, and a difference between a pressure $P_0$ applied to the electrode assembly in a discharged state and a pressure $P_1$ applied to the electrode assembly in a charged state is 0.90 MPa or less.

Fig. 1

Fig. 2

Fig. 3

Fig. 4

Fig. 5

**INTERNATIONAL SEARCH REPORT**

| International application No. |
|---|
| **PCT/JP2022/015290** |

| A. | CLASSIFICATION OF SUBJECT MATTER |
|---|---|

*H01G 11/52*(2013.01)i; *H01M 10/058*(2010.01)i; *H01M 50/449*(2021.01)i; *H01M 50/489*(2021.01)i
FI:   H01M10/058; H01M50/489; H01G11/52; H01M50/449

According to International Patent Classification (IPC) or to both national classification and IPC

| B. | FIELDS SEARCHED |
|---|---|

Minimum documentation searched (classification system followed by classification symbols)

H01G11/52; H01M10/058; H01M50/449; H01M50/489

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2015-146273 A (TOYOTA MOTOR CORP.) 13 August 2015 (2015-08-13) | 1-12 |
| A | WO 2014/119275 A1 (SANYO ELECTRIC CO., LTD.) 07 August 2014 (2014-08-07) | 1-12 |
| A | JP 2019-102231 A (GS YUASA CORP.) 24 June 2019 (2019-06-24) | 1-12 |

☐ Further documents are listed in the continuation of Box C.      ☑ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **03 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/015290**

| Patent document cited in search report | | | Publication date (day/month/year) | Patent family member(s) | | | Publication date (day/month/year) |
|---|---|---|---|---|---|---|---|
| JP | 2015-146273 | A | 13 August 2015 | (Family: none) | | | |
| WO | 2014/119275 | A1 | 07 August 2014 | US | 2015/0357635 | A1 | |
| | | | | CN | 105009350 | A | |
| JP | 2019-102231 | A | 24 June 2019 | US | 2020/0395578 | A1 | |
| | | | | EP | 3688827 | A1 | |
| | | | | CN | 111316466 | A | |

Form PCT/ISA/210 (patent family annex) (January 2015)

**EP 4 300 524 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018045797 A